# FASCICULE DE BREVET EUROPEEN

(11) **EP 2 961 060 B1**
(45) Date de publication et mention de la délivrance du brevet: **09.06.2021**
(21) Numéro de dépôt: 14305980.6
(22) Date de dépôt: 23.06.2014
(51) Int. Cl.: H02P 9/46

(54) **Système d'alimentation électrique d'une charge et procédé d'alimentation correspondant**
Elektrisches Versorgungssystem einer Last und entsprechendes Versorgungsverfahren
Power supply system for a load and corresponding supply method

(43) Date de publication de la demande: 30.12.2015
(73) Titulaire: GE Energy Power Conversion Technology Ltd, Rugby Warwickshire CV21 1BU (GB)
(72) Inventeur: Fessler, Eric, 90000 Belfort (FR); Crouzet, Gilbert-Philippe, 90000 Belfort (FR); Leclere, Loic, 90000 Belfort (FR)
(74) Mandataire: Casalonga

(56) Documents cités:
- WO-A1-2009/082375
- CN-A- 101 005 204
- US-A- 3 675 117

## Description

La présente invention concerne l'alimentation électrique d'une charge et se rapporte, dans une application particulièrement intéressante mais non limitative de l'invention, à un système d'alimentation électrique destiné à fournir une alimentation continue à un réseau d'alimentation d'un bateau.

Dans l'état de la technique, tel que dans le document US 3675117 les systèmes d'alimentation peuvent être réalisés à partir d'une machine électrique synchrone comprenant un rotor bobiné et un circuit électrique apte à assurer l'excitation de la machine synchrone.

Les générateurs asynchrones ou à induction, comprenant notamment un rotor à cage d'écureuil, sont avantageux notamment en terme de fiabilité, de simplicité mécanique et de coût et constituent également une solution avantageuse pour la réalisation d'une source d'alimentation électrique.

Les générateurs à induction comportent généralement, en sortie, un circuit redresseur destiné à convertir la tension alternative délivrée par le générateur en une tension continue.

On utilise classiquement, à cet égard, un redresseur basé sur l'utilisation de transistors bipolaires à grille isolée ou IGBT, en anglais.

De tels redresseurs permettent d'assurer efficacement la fonction de magnétisation du générateur. Ils présentent toutefois un certain nombre d'inconvénients, notamment relatifs au fait qu'ils sont couteux et relativement complexes.

En outre, les redresseurs à IGBT ne sont pas appropriés pour faire transiter un courant élevé. Par conséquent, un redresseur à IGBT n'est généralement pas approprié pour délivrer un courant de court-circuit élevé lorsqu'un court-circuit apparait dans un réseau de distribution auquel le redresseur est connecté, sans prévoir un surdimensionnement du redresseur, c'est-à-dire un nombre élevé de transistors IGBT couteux.

Le but de l'invention divulguée dans les revendications indépendantes 1 et 9, est donc de palier cet inconvénient et, notamment, de réduire le dimensionnement d'un système d'alimentation comprenant un générateur asynchrone, tout en permettant la magnétisation du générateur.

Un autre but de l'invention est de proposer un système d'alimentation électrique comprenant un générateur asynchrone capable de supporter des courants de court-circuit élevés, et ce dans un encombrement réduit.

L'invention a donc pour objet, selon un premier aspect, un système d'alimentation électrique d'une charge, comprenant un générateur asynchrone comprenant un rotor à cage destiné à être entrainé par un moyen moteur et un redresseur apte à redresser la tension délivrée par le générateur.

Selon une caractéristique générale de ce système d'alimentation, le redresseur est un redresseur à composants électroniques unidirectionnels. En outre, le système d'alimentation électrique comprend une source de puissance réactive pour la magnétisation du générateur asynchrone.

Selon une autre caractéristique de l'invention, la source de puissance réactive comporte une source de puissance réactive variable.

Selon encore une autre caractéristique de l'invention, la source de puissance réactive variable constitue un moyen de contrôle de la tension de sortie du redresseur.

Dans un mode de réalisation, la source de puissance réactive variable comprend un onduleur de tension à transistors bipolaires à grille isolée et au moins un condensateur.

Selon encore une autre caractéristique du système d'alimentation selon l'invention, la source de puissance réactive comporte en outre une source de puissance réactive fixe.

Avantageusement, la source de puissance réactive fixe comporte un circuit RLC.

De préférence, la source de puissance réactive fixe constitue un moyen de filtrage des courants harmoniques issus de la source de puissance réactive variable.

La source de puissance réactive peut avantageusement constituer un moyen de filtrage de courants harmoniques issus du redresseur.

Dans un mode de réalisation, le système d'alimentation comprend un circuit de charge graduelle de condensateurs de la source de puissance réactive variable associé à un ensemble de contacteurs pour provoquer l'alimentation électrique d'un bus de tension continue.

Le système d'alimentation peut en outre comporter un ensemble de condensateurs de filtrage raccordés en sortie du redresseur.

Par exemple, les composants électroniques unidirectionnels sont des diodes ou des thyristors.

L'invention a également pour objet, selon un deuxième aspect, un procédé d'alimentation d'une charge en énergie électrique, au moyen d'un système d'alimentation électrique comprenant un générateur asynchrone comprenant un rotor à cage entraîné par un moyen moteur et un redresseur à composants électroniques unidirectionnels apte à redresser la tension délivrée par le générateur, dans lequel on magnétise le générateur asynchrone à partir d'une source de puissance réactive.

Dans un mode de mise en œuvre, ladite source de puissance réactive comprenant une source de puissance réactive variable comprenant un onduleur de tension, ledit onduleur de tension entraine en rotation un arbre de couplage du générateur et du moyen moteur jusqu'à une vitesse de virage du générateur asynchrone lors du démarrage ou de la décélération du système d'alimentation.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique montrant l'architecture d'un système d'alimentation électrique conforme à l'invention ;
- la figure 2 montre le système de la figure 1 lors du démarrage ;
- la figure 3 montre le système de la figure 1 lors d'une phase ultérieure du démarrage ;
- la figure 4 illustre les flux de puissance active, de puissance réactive et de puissance déformante lors du fonctionnement nominal du système d'alimentation de la figure 1 ;
- la figure 5 illustre les formes des tensions et des courants en des points caractéristiques du système de la figure 1, lors de la magnétisation du générateur asynchrone ; et
- la figure 6 montre la forme des courants en des points caractéristiques du système d'alimentation électrique selon l'invention, lors de la mise en œuvre du filtrage actif.

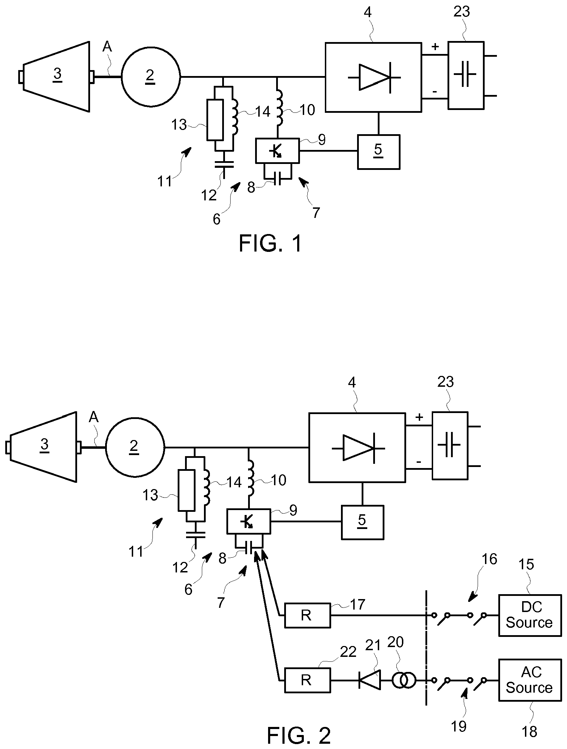

On se référera tout d'abord à la figure 1 qui illustre l'architecture générale d'un système d'alimentation d'une charge en énergie électrique à courant continu, désigné par la référence numérique générale 1.

Dans l'exemple de réalisation envisagé, ce système d'alimentation 1 est destiné à être embarqué à bord d'un bateau pour constituer une source de tension continue. Bien entendu, on ne sort pas du cadre de l'invention lorsqu'il s'agit d'alimenter tout autre type de charge.

Le système d'alimentation 1 comporte essentiellement un générateur triphasé à induction 2 entrainé en rotation par un moyen moteur 3, par exemple un moteur diesel ou une turbine à vapeur ou à gaz, et un redresseur 4 assurant la conversion de la tension alternative délivrée par le générateur en une tension continue.

Comme on le voit, le générateur 2 et le moyen moteur 3 sont reliés par un arbre A de transmission commun, l'ensemble constituant un groupe moto-alternateur.

Le générateur à induction 2 est un générateur asynchrone à cage d'écureuil et présente dès lors une structure mécaniquement simple, fiable et peu onéreuse.

Le redresseur 4, quant à lui, comporte des composants électroniques unidirectionnels. Ces composants électroniques unidirectionnels peuvent être commandables. Ainsi, les éléments redresseurs du redresseur 4 sont avantageusement constitués de diodes ou de thyristors, contrairement à l'état de la technique qui utilise un pont redresseur à base de transistors IGBT.

Lorsque le redresseur 4 est réalisé à partir de thyristors, un circuit de commande 5 assure le pilotage des thyristors, et notamment de la gâchette de chaque thyristor de manière à redresser le courant alternatif délivré par le générateur 2.

Par ailleurs, le système d'alimentation 1 comporte une source de puissance réactive 6 qui assure la magnétisation du circuit magnétique du générateur 2.

La source de puissance réactive comporte en premier lieu une source variable 7 de puissance réactive comprenant un ensemble de condensateurs 8 et un circuit onduleur 9 branché en dérivation entre le générateur 2 et le redresseur 4 par l'intermédiaire d'une inductance 10.

Le circuit onduleur est ici réalisé à partir de transistors IGBT commandés par le circuit de commande 5, par exemple en modulation par largeur d'impulsions (MLI).

Comme cela sera indiqué par la suite, cette source variable 7 de puissance réactive constitue un filtre actif assurant le filtrage des courants harmoniques issus du redresseur 4. Elle assure également la régulation de la tension continue délivrée en sortie du redresseur 4 en contrôlant la magnétisation du générateur 2.

La source 6 de puissance réactive comporte en second lieu une source fixe 11 de puissance réactive constituée ici par un circuit RLC branché en dérivation entre le générateur 2 et le redresseur 4.

Cette source fixe 11 comporte un ou plusieurs condensateurs 12 connectés à une résistance 13 et à une inductance 14 branchées en parallèle.

La source fixe 11 de puissance réactive constitue un filtre passif assurant le filtrage des courants harmoniques issus du redresseur 4 ainsi que le filtrage passif des courants harmoniques issus du filtre actif 7.

Il participe également à la magnétisation d'une partie du générateur 2.

Les transistors IGBT entrant dans la constitution de l'onduleur 9 assurent essentiellement la fourniture de la puissance réactive nécessaire à la magnétisation du générateur 2. En raison du branchement en dérivation de l'onduleur, il n'assure aucune fonction de redressement de la tension délivrée par le générateur de sorte que les transistors à IGBT peuvent être dimensionnés de manière appropriée pour assurer cette magnétisation, ce qui permet de réduire les contraintes de dimensionnement de ces transistors.

Le dimensionnement de ces transistors peut encore être réduit grâce à la présence de la source fixe 11 de puissance réactive qui participe également à la magnétisation du générateur. On notera que cette source fixe 11 constitue un filtre passif qui assure le filtrage du contenu harmonique généré lors du fonctionnement de l'onduleur.

Par ailleurs, la source variable 7 de puissance réactive et la source fixe 11 de puissance réactive qui sont disposées en parallèle et en dérivation par rapport au générateur 2 et au redresseur 4 assurent un filtrage efficace des distorsions harmoniques engendrées par le redresseur 4 de sorte que les courants harmoniques engendrés par le redresseur 4 sont filtrés par les filtres actifs et passifs sans atteindre le générateur 2 à induction qui peut, par conséquent, être également dimensionné de manière appropriée.

On se réfèrera maintenant à la figure 2 qui montre le système d'alimentation de la figure 1 lors d'une phase de démarrage.

Au cours de cette phase, on procède à une charge progressive des condensateurs entrant dans la constitution de la source 6 de puissance réactive afin d'éviter une augmentation brusque du courant engendrée par la présence de ces condensateurs.

Comme le montre la figure 2, selon un premier mode de réalisation, cette pré-charge peut être réalisée au moyen d'une source 15 de courant continu raccordée par l'intermédiaire d'un interrupteur 16 et d'une résistance 17 à la source de puissance réactive 6.

Par exemple, la source 15 est constituée de batteries.

Il est également possible, en variante, d'effectuer cette pré-charge à partir d'une source de courant alternatif 18 raccordée par un interrupteur 19 à un transformateur 20 d'adaptation de tension, d'une diode 21 de redressement assurant la transformation du courant issu de la source 18 en un courant continu et d'une résistance 22 raccordée à la source 6 de puissance réactive.

Lors de la pré-charge, les condensateurs 8 associés à l'onduleur 9 sont progressivement chargés. Lorsque la source variable 7 de puissance réactive devient opérationnelle, celle-ci réalise à son tour la pré-charge graduelle des condensateurs 12 du filtre passif 11.

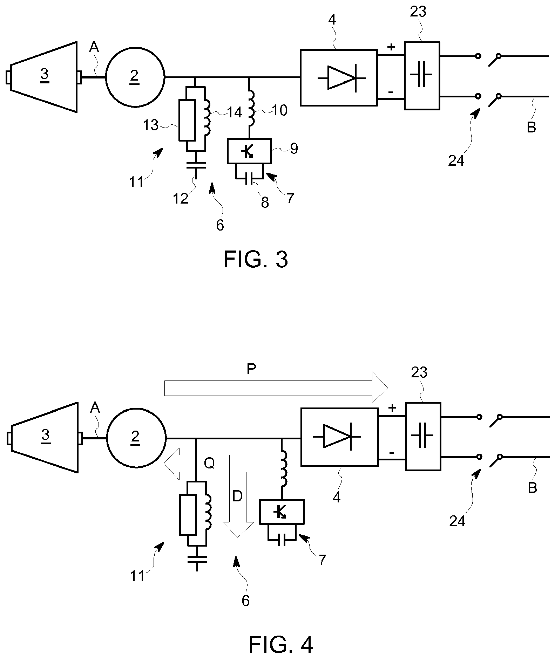

Par ailleurs, lors de cette phase de démarrage, l'onduleur 9 est piloté par le circuit de commande 5 de manière à charger des condensateurs de filtrage 23 prévus en sortie du redresseur 4 et de manière à procéder à une magnétisation lente du générateur 2 entraînant une augmentation graduelle consécutive de la tension de sortie du redresseur. Lorsqu'un niveau de tension nominale est atteint en sortie du redresseur, l'unité de commande 5 provoque la fermeture d'un disjoncteur 24 pour provoquer l'alimentation d'un bus B de tension continue (figure 3).

Comme le montre la figure 4, lors du fonctionnement nominal du système d'alimentation, le générateur 2 délivre de la puissance active P au redresseur 4, lequel convertit la tension alternative délivrée en sortie du générateur en une tension continue.

Par ailleurs, comme indiqué précédemment, la puissance réactive Q nécessaire à la magnétisation du générateur 2 est fournie d'une part par la source variable 7 et, d'autre part, par la source fixe 11.

Le niveau de tension délivré en sortie du système d'alimentation est contrôlé en agissant sur l'onduleur 9. Ainsi, une proportion fixe de la puissance réactive est fournie par la source fixe 11, le reste étant fourni, de manière contrôlée, par la source variable 7 pour contrôler le niveau de tension de sortie, le nombre de transistors IGBT nécessaires pour la magnétisation du générateur 2 pouvant dès lors être réduit.

Par ailleurs, la puissance déformante D contenant des courants harmoniques issus du redresseur 4, d'une part et de l'onduleur 9, d'autre part, est filtrée au sein de la source de puissance réactive 6.

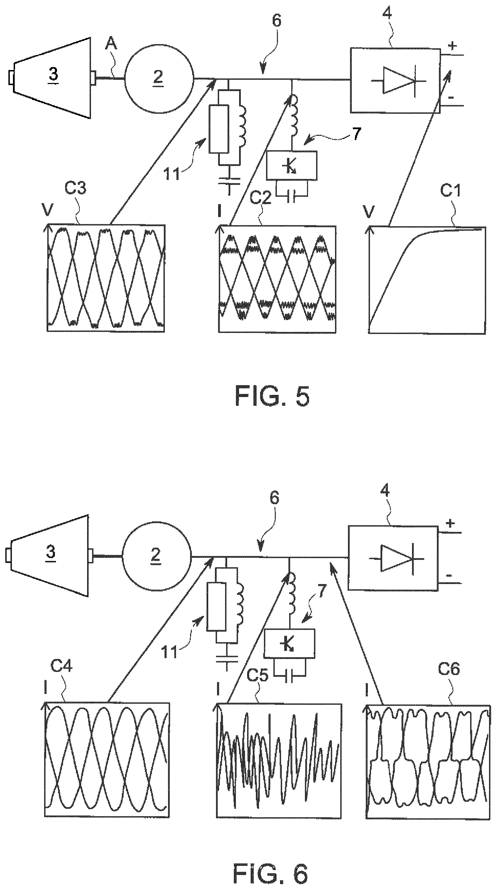

Comme le montre la figure 5, qui illustre l'évolution de la tension et du courant en des points caractéristiques du circuit du système d'alimentation, on voit qu'en sortie du redresseur 4, la tension de sortie du système d'alimentation évolue lentement lors de la séquence de démarrage jusqu'à la valeur nominale.

Le courant transitant vers les filtres, et notamment vers le filtre actif, présente une distorsion harmonique relativement importante (courbe C2). En revanche, la tension présente en sortie du générateur 2 présente un faible niveau de distorsion harmonique en raison du filtrage mis en œuvre au sein de la source de puissance réactive.

En effet, en référence à la figure 6, la courbe C4 montre que l'on peut obtenir en sortie du générateur 2 un courant dépourvu de contenu harmonique lorsque l'on injecte dans le signal C6 issu du redresseur une composante C5 complémentaire de celle d'un signal idéal dépourvu de distorsion.

On notera que l'invention qui vient d'être décrite et, notamment, le filtre actif 7, peut être utilisée pour assurer le virage du groupe moto-alternateur pour limiter les conséquences liées aux contraintes thermomécaniques s'appliquant sur la ligne d'arbre A, en assurant un maintien de la vitesse du groupe à la vitesse de virage lors de la décélération ou un entrainement du groupe moto-alternateur jusqu'à la vitesse de virage lors de l'accélération, au démarrage du groupe.

Dans ce mode de fonctionnement, le filtre actif qui est utilisé en onduleur de tension à IGBT se charge d'alimenter le générateur 2 pour le faire fonctionner en tant que moteur. Ainsi, au démarrage du groupe moto-alternateur, l'onduleur du filtre actif fournit l'alimentation nécessaire pour fournir le couple nécessaire au décollage de l'arbre A, puis entraîne le générateur asynchrone jusqu'à la vitesse de virage. Après que la vitesse de virage ait été atteinte, le moyen moteur 3 assure le relais du maintien en rotation et l'accélération de la ligne d'arbre A.

De même, à l'arrêt du système, lorsque le moyen moteur 3 a décéléré et est en roue libre, et lorsque la ligne d'arbre a atteint la vitesse de virage, l'onduleur 9 prend le relais et assure l'entrainement du générateur asynchrone pour maintenir la vitesse de virage.

## Revendications

1. Système d'alimentation électrique d'une charge, comprenant un générateur asynchrone (2) comprenant un rotor à cage destiné à être entraîné par un moyen moteur (3) et un redresseur (4) apte à redresser la tension délivrée par le générateur pour alimenter la charge en tension continue, le redresseur étant un redresseur à composants électroniques unidirectionnels et comprenant une source de puissance réactive (6) pour la magnétisation du générateur asynchrone, la source de puissance réactive comportant une source de puissance réactive variable et une source de puissance réactive fixe (11), **caractérisé en ce que** la source de puissance réactive variable (7) comprend un onduleur de tension (9) à transistors bipolaires à grille isolée et au moins un condensateur (8), la source variable (7) de puissance réactive et la source fixe (11) de puissance réactive étant disposées en parallèle et en dérivation par rapport au générateur (2) et au redresseur (4).

2. Système d'alimentation électrique d'une charge selon la revendication 1, **caractérisée en ce que** la source de puissance réactive variable (7) constitue un moyen de contrôle de la tension de sortie du redresseur.

3. Système d'alimentation électrique d'une charge selon l'une des revendications 1 et 2, **caractérisé en ce que** la source de puissance réactive fixe comporte un circuit RLC (12, 13, 14).

4. Système d'alimentation électrique d'une charge selon l'une quelconque des revendications 1 à 3, **caractérisé en ce que** la source de puissance réactive fixe (11) constitue un moyen de filtrage des courants harmoniques issus de la source de puissance réactive variable (7)

5. Système d'alimentation électrique d'une charge selon l'une quelconque des revendications 1 à 4, **caractérisé en ce que** la source de puissance réactive (6) constitue un moyen de filtrage des courants harmoniques issus du redresseur (4).

6. Système d'alimentation électrique d'une charge selon l'une quelconque des revendications 1 à 5, **caractérisé en ce qu'**il comporte un circuit de charge graduelle (15 ; 18) de condensateurs de la source de puissance réactive variable associé à un ensemble de contacteurs (24) pour provoquer l'alimentation électrique d'un bus (B) de tension continue.

7. Système d'alimentation électrique d'une charge selon l'une quelconque des revendications 1 à 6, **caractérisé en ce qu'**il comporte un ensemble de condensateurs (23) de filtrage raccordés en sortie du redresseur (4).

8. Système d'alimentation électrique d'une charge selon l'une quelconque des revendications 1 à 7, **caractérisé en ce que** les composants électriques unidirectionnels sont des diodes ou des thyristors.

9. Procédé d'alimentation d'une charge en énergie électrique, au moyen d'un système d'alimentation électrique comprenant un générateur asynchrone (2) comprenant un rotor à cage entraîné par un moyen moteur (3) et un redresseur à composants électroniques unidirectionnels apte à redresser la tension délivrée par le générateur pour alimenter la charge en tension continue, dans lequel on magnétise le générateur asynchrone à partir d'une source de puissance réactive (6) comportant une source de puissance réactive variable et une source de puissance réactive fixe (11), **caractérisé en ce que** l'on magnétise le générateur en chargeant progressivement au moins un condensateur de la source de puissance réactive variable (7) et des condensateurs de la source de puissance réactive fixe, et en pilotant un onduleur de tension (9) à transistors bipolaires à grille isolée de la source de puissance réactive variable de manière à procéder à une magnétisation lente du générateur, la source variable (7) de puissance réactive et la source fixe (11) de puissance réactive étant disposées en parallèle et en dérivation par rapport au générateur (2) et au redresseur (4).

10. Procédé d'alimentation d'une charge en énergie électrique selon la revendication 9, **caractérisé en ce que** ledit onduleur de tension entraîne en rotation un arbre (A) de couplage du générateur et du moyen moteur jusqu'à une vitesse de virage du générateur asynchrone lors du démarrage ou de la décélération du système d'alimentation.

## Patentansprüche

1. Elektrisches Versorgungssystem einer Last, umfassend einen Asynchrongenerator (2), umfassend einen Käfigläufer, der bestimmt ist, von einem Motormittel (3) angetrieben zu werden, und einen Gleichrichter (4), der imstande ist, die von dem Generator bereitgestellte Spannung gleichzurichten, um die Last mit Gleichspannung zu versorgen, wobei der Gleichrichter ein Gleichrichter mit eindirektionalen elektronischen Komponenten ist und eine reaktive Leistungsquelle (6) für die Magnetisierung des Asynchrongenerators umfasst, wobei die reaktive Leistungsquelle eine variable reaktive Leistungsquelle und eine feste reaktive Leistungsquelle (11) aufweist, **dadurch gekennzeichnet, dass** die variable reaktive Leistungsquelle (7) einen Spannungswechselrichter (9) mit bipolaren Transistoren mit isoliertem Gitter und mindestens einen Kondensator (8) umfasst, wobei die variable reaktive Leistungsquelle (7) und die feste reaktive Leistungsquelle (11) parallel und im Bypass in Bezug auf den Generator (2) und den Gleichrichter (4) angeordnet sind.

2. Elektrisches Versorgungssystem einer Last nach Anspruch 1, **dadurch gekennzeichnet, dass** die variable reaktive Leistungsquelle (7) ein Steuermittel der Ausgangsspannung des Gleichrichters darstellt.

3. Elektrisches Versorgungssystem einer Last nach einem der Ansprüche 1 und 2, **dadurch gekennzeichnet, dass** die feste reaktive Leistungsquelle einen RLC-Schaltkreis (12, 13, 14) aufweist.

4. Elektrisches Versorgungssystem einer Last nach einem der Ansprüche 1 bis 3, **dadurch gekennzeichnet, dass** die feste reaktive Leistungsquelle (11) ein Filtermittel der harmonischen Ströme aus der variablen reaktiven Leistungsquelle (7) darstellt.

5. Elektrisches Versorgungssystem einer Last nach einem der Ansprüche 1 bis 4, **dadurch gekennzeichnet, dass** die reaktive Leistungsquelle (6) ein Filtermittel der harmonischen Ströme aus dem Gleichrichter (4) darstellt.

6. Elektrisches Versorgungssystem einer Last nach einem der Ansprüche 1 bis 5, **dadurch gekennzeichnet, dass** es einen graduellen Ladekreis (15; 18) von Kondensatoren der variablen reaktiven Leistungsquelle aufweist, der einer Anordnung von Schaltern (24) zugeordnet ist, um eine elektrische Versorgung eines Gleichspannungsbusses (B) zu bewirken.

7. Elektrisches Versorgungssystem einer Last nach einem der Ansprüche 1 bis 6, **dadurch gekennzeichnet, dass** es eine Anordnung von Filterkondensatoren (23) aufweist, die am Ausgang des Gleichrichters (4) angeschlossen sind.

8. Elektrisches Versorgungssystem einer Last nach einem der Ansprüche 1 bis 7, **dadurch gekennzeichnet, dass** die eindirektionalen elektrischen Komponenten Dioden oder Thyristoren sind.

9. Verfahren zur Versorgung einer Last mit elektrischer Energie mittels eines elektrischen Versorgungssystems, umfassend einen Asynchrongenerator (2), der einen Käfigläufer umfasst, der von einem Motormittel (3) angetrieben wird, und einen Gleichrichter mit eindirektionalen elektronischen Komponenten, der imstande ist, die von dem Generator bereitgestellte Spannung gleichzurichten, um die Last mit Gleichspannung zu versorgen, wobei der Asynchrongenerator ab einer reaktiven Leistungsquelle (6) magnetisiert wird, aufweisend eine variable reaktive Leistungsquelle und eine feste reaktive Leistungsquelle (11), **dadurch gekennzeichnet, dass** der Generator magnetisiert wird, indem schrittweise mindestens ein Kondensator der variablen reaktiven Leistungsquelle (7) und Kondensatoren der festen reaktiven Leistungsquelle geladen werden und durch Steuern eines Spannungswechselrichters (9) mit bipolaren Transistoren mit isoliertem Gitter der variablen reaktiven Leistungsquelle derart, dass eine langsame Magnetisierung des Generators durchgeführt wird, wobei die variable reaktive Leistungsquelle (7) und die feste reaktive Leistungsquelle (11) parallel und im Bypass in Bezug auf den Generator (2) und den Gleichrichter (4) angeordnet sind.

10. Verfahren zur Versorgung einer Last mit elektrischer Energie nach Anspruch 9, **dadurch gekennzeichnet, dass** der Spannungswechselrichter eine Kopplungswelle (A) des Generators und des Motormittels bis zu einer Kurvengeschwindigkeit des Asynchrongenerators beim Starten oder beim Entschleunigen des Versorgungssystems rotatorisch antreibt.

## Claims

1. Power supply system for a load, comprising an asynchronous generator (2) comprising a cage rotor intended to be driven by a motor means (3) and a rectifier (4) capable of rectifying the voltage delivered by the generator to power the load with continuous voltage, the rectifier being a rectifier with unidirectional electronic components and comprising a source of reactive power (6) for the magnetisation of the asynchronous generator, the source of reactive power including a variable source of reactive power and a fixed source of reactive power (11), **characterised in that** the variable source of reactive power (7) comprises a voltage undulator (9) with insulated-gate bipolar transistors and at least one capacitor (8), the variable source (7) of reactive power and the fixed source (11) of reactive power being disposed in parallel and in bypass with respect to the generator (2) and the rectifier (4).

2. Power supply system for a load according to claim 1, **characterised in that** the variable source of reactive power (7) forms a means for controlling the output voltage of the rectifier.

3. Power supply system for a load according to one of claims 1 and 2, **characterised in that** the fixed source of reactive power includes an RLC circuit (12, 13, 14).

4. Power supply system for a load according to any one of claims 1 to 3, **characterised in that** the fixed source of reactive power (11) forms a means for filtering the harmonic currents coming from the variable source of reactive power (7).

5. Power supply system for a load according to any one of claims 1 to 4, **characterised in that** the source of reactive power (6) forms a means for filtering the harmonic currents coming from the rectifier (4).

6. Power supply system for a load according to any one of claims 1 to 5, **characterised in that** it includes a circuit (15; 18) for gradual charging of capacitors of the variable source of reactive power, associated with a set of contactors (24) to provoke the power supply of a DC-voltage bus (B).

7. Power supply system for a load according to any one of claims 1 to 6, **characterised in that** it includes a set of filtering capacitors (23) connected at the output of the rectifier (4).

8. Power supply system for a load according to any one of claims 1 to 7, **characterised in that** the unidirectional electronic components are diodes or thyristors.

9. Method for supplying a load with electric energy, via a power supply system comprising an asynchronous generator (2) comprising a cage rotor driven by a motor means (3) and a rectifier with unidirectional electronic components capable of rectifying the voltage delivered by the generator to power the load with continuous voltage, wherein the asynchronous generator is magnetised via a source of reactive power (6) including a variable source of reactive power and a fixed source of reactive power (11), **characterised in that** the generator is magnetised by progressively charging at least one capacitor of the variable source of reactive power (7) and capacitors of the fixed source of reactive power, and by controlling a voltage undulator (9) with insulated-gate bipolar transistors of the variable source of reactive power in such a way as to carry out a slow magnetisation of the generator, the variable source (7) of reactive power and the fixed source (11) of reactive power being disposed in parallel and in bypass with respect to the generator (2) and the rectifier (4).

10. Method for supplying a load with electric energy according to claim 9, **characterised in that** said voltage undulator rotates a shaft (A) for coupling the generator and the motor means up to an inching speed of the asynchronous generator during the starting or the deceleration of the supply system.
